# EUROPÄISCHE PATENTSCHRIFT

(11) **EP 1 161 857 B1**
(45) Veröffentlichungstag und Bekanntmachung des Hinweises auf die Patenterteilung: **20.04.2005**
(21) Anmeldenummer: 01113242.0
(22) Anmeldetag: 31.05.2001
(51) Int. Cl.: A01D 45/02

(54) **Einzugs- und Pflückeinrichtung**
Gathering and picking device
Dispositif d'introduction et de cueillage

(30) Priorität: 10.06.2000 DE 10028887
(43) Veröffentlichungstag der Anmeldung: 12.12.2001
(73) Patentinhaber: Maschinenfabrik Kemper GmbH & Co. KG, 48703 Stadtlohn (DE)
(72) Erfinder: Wübbels, Richard, 46414 Rhede (DE); Wolters, Norbert, 48712 Gescher (DE)
(74) Vertreter: Holst, Sönke, Dr.

(56) Entgegenhaltungen:
- DE-A- 4 201 067
- DE-A- 19 734 747
- FR-A- 1 269 522
- US-A- 2 110 471
- US-A- 2 571 865
- US-A- 4 377 062

## Beschreibung

Die Erfindung betrifft eine Einzugs- und Pflückeinrichtung, mit einem in Drehung versetzbaren Einzugselement, das betreibbar ist, Teile, insbesondere Stängel, von auf einem Feld stehenden Pflanzen zu erfassen und die Pflanzen in den Pflückspalt einer Pflückeinrichtung einzuführen, die betreibbar ist, Teile von ihnen abzutrennen, wobei oberhalb des Einzugselements ein Förderelement vorgesehen ist, das sich stromaufwärts und oberhalb des eingangsseitigen Endes des Pflückspalts befindet, sich parallel zum Pflückspalt erstreckt und eingerichtet ist, die Pflanzen im Zusammenwirken mit dem Einzugselement in den Pflückspalt zu fördern.

In der DE 197 34 747 A ist ein Maisernte-Vorsatzgerät zum Anbau an eine selbstfahrende Erntemaschine beschrieben, das auf einem Feld stehende Pflanzen reihenunabhängig mäht und die Maiskolben von den Pflanzen pflückt. Das Gerät weist zum reihenunabhängigen Erfassen und Abmähen der Pflanzen ein Mähwerk mit einer rotierenden, am Außenumfang mit Aussparungen versehenen Trommel und einem darunter rotierenden Messer auf, wie es von Maisgebissen her bekannt ist. Die Pflanzen werden stromab des Mähwerks angebrachten, konventionellen Pflückaggregaten zugeführt. Es sind Ausräumscheiben oder in den Laufkreis des Mähwerks eintauchende Spitzen der Pflückwalzen vorgesehen, um die zu verarbeitenden Pflanzen vom Mähwerk abzunehmen und in das Pflückaggregat einzuführen. Die abgetrennten Kolben der Pflanzen werden durch zwei oberhalb des Pflückspalts angeordnete Kettenförderer abtransportiert. Als nachteilig ist dabei anzusehen, dass sich der Übergang abgereifter, weicher Stängel in das Pflückaggregat als problematisch erweisen kann.

In der US 4 377 062 A wird eine Einzugs- und Pflückeinrichtung eingangs genannter Art beschrieben. Sie umfasst einen durch feststehende Platten begrenzten Pflückspalt, unter dem sich Pflückwalzen befinden. An einer Seite des Einlasses des Pflückspalts ist ein sich um die Hochachse drehendes unteres Förderrad angeordnet. Auf der gegenüberliegenden Seite des Einlasses des Pflückspalts und ggf. auch davor ist eine Förderschnecke angeordnet, deren Drehachse sich parallel zum Pflückspalt nach hinten erstreckt. Ein oberes Förderrad ist weit oberhalb der Förderschnecke koaxial zum unteren Förderrad angeordnet. Die Pflanzen werden im Betrieb von den Förderrädern auf einer Seite des Pflückspalts und von der Förderschnecke auf der anderen Seite des Pflückspalts erfasst und in den Pflückspalt hineingezogen. Sobald die Pflanzenstängel in den Pflückspalt eingeführt sind, wirkt ihr oberhalb des Pflückspalts befindlicher Teil nur mit der Förderschnecke zusammen. Das untere Förderrad ist dann für die Teile der Pflanze oberhalb des Pflückspalts wirkungslos, da es sich unterhalb des Pflückspalts befindet. Das obere Förderrad ist hingegen derart weit oben angeordnet, dass es zumindest bei kleineren Pflanzen oder dann, wenn sie durch die Pflückwalzen weiter nach unten in den Pflückspalt gezogen wurden, wirkungslos ist. Durch die einseitige Abstützung und Förderung der Pflanzenteile oberhalb des Pflückspalts durch die Förderschnecke besteht die Gefahr, dass sich die Pflanzen zur Seite neigen und nicht mehr durch die Förderschnecke erfasst werden. Auf diese Weise können sich unerwünschte Gutstaus bilden.

Die FR 1 269 522 A schlägt eine Einzugs- und Pflückeinrichtung vor, bei der zwei Pflückwalzen einen Pflückspalt bilden. Oberhalb der Pflückwalzen erstreckt sich eine Förderschnecke dazu parallel nach hinten. Auf der anderen Seite des Pflückspalts befindet sich eine Förderkette mit Mitnehmern. Die Förderkette hat gegenüber einem drehbaren Element den Nachteil größeren Verschleißes.

Die der Erfindung zugrunde liegende Aufgabe wird darin gesehen, eine verbesserte Einzugs- und Pflückeinrichtung bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine Einzugs- und Pflückeinrichtung vorgeschlagen, bei der ein Einzugselement Teile - insbesondere Stängel - von Pflanzen erfasst und in einen Pflückspalt einführt. Das Einzugselement weist vorzugsweise eine relativ große Arbeitsbreite auf; es wirkt somit reihenunabhängig. Zusätzlich zum Einzugselement ist stromaufwärts und oberhalb des eingangsseitigen Endes der Pflückeinrichtung ein angetriebenes Förderelement angeordnet. Die vom Einzugselement an das eingangsseitige Ende des Pflückspalts herantransportierten Pflanzen kommen - noch bevor sie in die Pflückeinrichtung gelangt sind - in Berührung mit dem Förderelement. Das Förderelement erstreckt sich parallel zum Pflückspalt und fördert die Pflanzen im Zusammenwirken mit dem Einzugselement in den Pflückspalt hinein. Die Förderrichtung des Förderelements und die Längsrichtung des Pflückspalts verlaufen vorzugsweise parallel zueinander, so dass das Förderelement die Pflanzen problemlos in den Pflückspalt einführen kann. Das Förderelement ist oberhalb des Einzugselements angeordnet, insbesondere unmittelbar darüber. Dadurch erreicht man, dass die Pflanzen sich zwischen Förderelement und Einzugselement nicht wesentlich verbiegen können, was ein Einführen in den Pflückspalt erschweren würde. Das Einzugselement befindet sich oberhalb des Pflückspalts.

Durch das Förderelement ist insbesondere bei relativ weichen Stängeln ein unproblematisches Einführen der Pflanzen in den Pflückspalt gewährleistet, da das Förderelement eine zusätzliche Abstützung und Förderung der Pflanzen ermöglicht. Wegen der Stützwirkung des Förderelements ist ein Abknicken oder Einquetschen der Pflanzen zwischen Einzugselement und dem Rand des Pflückspalts nicht zu befürchten.

Das Förderelement ist vorzugsweise eine Förderschnecke, die sich über einen Bereich (bezüglich der Bewegungsrichtung der Pflanzen) stromauf des Pflückspalts und über wenigstens einen Teil der Länge des Pflückspalts erstreckt. Es ist zwar denkbar, sie über die gesamte Länge des Pflückspalts verlaufen zu lassen, um die Pflanzen entlang des Pflückspalts zu transportieren, was aber nicht unbedingt nötig ist, da der Transport der Pflanzen über die Länge des Pflückspalts durch das Einzugselement erfolgen kann. Aus Kosten- und Gewichtsgründen ist daher eine relativ kurze Förderschnecke bevorzugt, die nur das eingangsseitige Ende des Pflückspalts und einen Bereich - in Bewegungsrichtung der Pflanzen betrachtet - davor und dahinter überdeckt. Anstelle einer Förderschnecke kann auch ein von Maispflückern an sich bekannter, jedoch demgegenüber verkürzter und entgegen der Bewegungsrichtung der Pflanzen (also stromaufwärts) versetzter Kettenförderer mit Mitnehmern zum Erfassen und Einführen der Pflanzen in den Pflückspalt Verwendung finden.

Es bietet sich an, das Förderelement auf der Seite des Pflückspalts anzuordnen, die dem Einzugselement gegenüberliegt. Bewegen sich die Pflanzen relativ zum Einzugselement nach außen, kommen sie am Förderelement zum Anliegen. Das Förderelement verbringt sie dann in den Pflückspalt.

Zum Antrieb des Förderelements kann ein Getriebe dienen, das eine Antriebsverbindung zwischen einer angetriebenen Pflückwalze der Pflückeinrichtung und dem Förderelement herstellt. Das Getriebe ist vorteilhafterweise an der (bezüglich der Bewegungsrichtung der Pflanzen) stromaufwärts liegenden Seite der Pflückwalze und des Förderelements angeordnet. Diese Seite liegt in der Regel in Vorwärtsfahrtrichtung der Einzugs- und Pflückeinrichtung vorn.

Grundsätzlich wäre es denkbar, das Förderelement an seinen beiden Enden an einem ortsfesten Element, insbesondere (direkt oder indirekt) am Rahmen, Gestell oder dergleichen der Einzugs- und Pflückeinrichtung abzustützen. In der Regel reicht es aber aus, es nur an einem Ende abzustützen und drehbar zu lagern. Dabei handelt es sich zweckmäßigerweise um das dem Getriebe zugewandte Ende des Förderelements.

Um das Einführen der Pflanzen in den Pflückspalt weiter zu verbessern, ist vorgeschlagen, die Pflückeinrichtung mit einer Pflückwalze mit einem in Bewegungsrichtung der Pflanzen stromaufwärts angeordneten Bereich auszustatten, in dem ein Schneckenförderer angeordnet ist, der ebenfalls die an ihm zum Anliegen kommenden Pflanzen in den Pflückspalt transportiert. Die Fördereinrichtung ist oberhalb des Schneckenförderers angeordnet. Im Ergebnis wird eine Pflanze vom Schneckenförderer der Pflückwalze, von der Fördereinrichtung und vom Einzugselement in den Pflückspalt verbracht. Die Pflanze wird also an drei Punkten abgestützt, so dass ein Abknicken auch weicher Pflanzen nicht zu befürchten ist. Die Fördergeschwindigkeiten der Fördereinrichtung, des Schneckenförderers und des Einzugselements stimmen in der Regel überein, so dass die Pflanze in vertikaler Stellung gefördert und nicht wegen unterschiedlicher Fördergeschwindigkeiten verbogen wird.

Der Schneckenförderer im stromaufwärts liegenden Bereich der Pflückwalze und die Fördereinrichtung enden vorzugsweise genau übereinander. An dieser Stelle beginnen die Pflückwalzen auf die Pflanzen einzuwirken und sie nach unten einzuziehen.

Das Einzugselement kann außerdem dazu dienen, die Pflanzen über die wirksame Länge der Pflückeinrichtung zu transportieren, also den Teil der Länge der Pflückeinrichtung, in dem die Pflückeinrichtung die Pflanze bearbeitet, d. h. einzieht und die Nutzteile von Resten der Pflanze trennt.

Das Einzugselement kann sich um eine zumindest etwa vertikale Achse drehen und mit nach außen weisenden Fingern versehen sein, die zum Erfassen und Transportieren von Teilen, insbesondere Stängeln, der Pflanze dienen.

Die Finger des Einzugselements haben vorzugsweise vorlaufende Oberflächen mit abweisendem Förderverhalten, stoßen also eindringende Pflanzenteile nach außen ab. Dieses Förderverhalten kann durch eine entgegen der Drehrichtung nachlaufende Krümmung der Finger des Einzugselements erzielt werden. Man erreicht dadurch, dass ein Stängel einer Pflanze vom Einzugselement nach außen gedrückt wird und vermeidet, dass der Stängel aggressiv nach innen gezogen wird und sich zwischen dem Abstreifblech und dem Finger einklemmt.

In den Zeichnungen ist ein nachfolgend näher beschriebenes Ausführungsbeispiel der Erfindung dargestellt. Es zeigt:
- Fig. 1: eine Draufsicht auf eine Einzugs- und Pflückeinrichtung einer Erntegutbergungsvorrichtung;
- Fig. 2: eine Seitenansicht der Einzugs- und Pflückeinrichtung aus Figur 1; und
- Fig. 3: einen vertikalen Schnitt durch die Einzugs- und Pflückeinrichtung aus Figur 1.

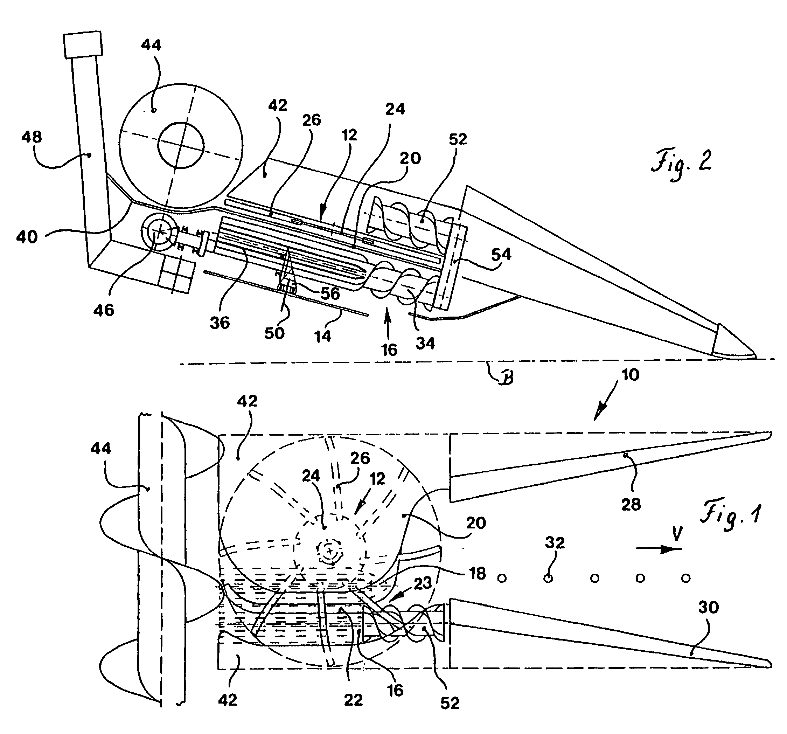

In Figur 1 ist eine Einzugs- und Pflückeinrichtung 10 einer Erntegutbergungsvorrichtung dargestellt. Eine vollständige Erntegutbergungsvorrichtung weist in der Regel eine Mehrzahl von Einzugs- und Pflückeinrichtungen 10 auf, obwohl auch denkbar wäre, eine Erntegutbergungsvorrichtung mit nur einer einzelnen Einzugs- und Pflückeinrichtung 10 zu versehen. Finden mehrere Einzugs- und Pflückeinrichtungen 10 Verwendung, können sie gleichartig oder symmetrisch zur Längsmittelebene der Erntegutbergungsvorrichtung gestaltet sein.

Die Einzugs- und Pflückeinrichtung 10 weist ein oberes Einzugselement 12, das zum Erfassen und Einziehen der zu erntenden Pflanze dient, sowie ein drehbares Häckselmesser 14 und eine erste Pflückwalze 16 und einer zweiten Pflückwalze 18 auf, die unterhalb eines in einem Abstreifblech 20 eingebrachten Pflückspalts 22 angeordnet sind.

Das obere Einzugselement 12 ist um eine vertikal verlaufende Achse drehbar angeordnet und wird durch einen - in den Zeichnungen nicht erkennbaren - Antrieb in Rotation versetzt, in Figur 1 im Uhrzeigersinn. Das Einzugselement 12 ist oberhalb des Abstreifblechs 20 angeordnet und hat eine leicht nach vorn geneigte Drehachse, da in Figur 2 die Linie B die Bodenlinie darstellt. Das Einzugselement 12 besteht in seinem grundsätzlichen Aufbau aus einer zentralen Scheibe 24 mit über ihren Umfang verteilten, sich im wesentlichen radial erstreckenden Fingern 26, die in der Ebene der Scheibe 24 entgegen der Drehrichtung, also nachlaufend gekrümmt sind. Die Finger 26 haben daher ein abweisendes Förderverhalten. Alternativ oder zusätzlich zur Krümmung der Finger 26 wäre eine gesteuerte, radiale bzw. azimutale Bewegung der Finger 26 relativ zur Scheibe 24 denkbar, wie sie von Haspeln bzw. Förderschnecken von Schneidwerken her bekannt ist, und durch eine Exzentersteuerung o. ä. erzielt werden kann, um ein abweisendes Förderverhalten zu erzielen.

Wie anhand der in Figur 1 dargestellten Draufsicht auf die Einzugs- und Pflückeinrichtung 10 erkennbar ist, sind den Einzugselementen 14, 16 in Vorwärtsbewegungsrichtung V der Erntegutbergungsvorrichtung Stängelteiler 28, 30 vorgeordnet, die Pflanzen 32, welche nicht genau vor dem Einzugselement 12, stehen, während der Bewegung der Einzugs- und Pflückeinrichtung 10 in Vorwärtsfahrtrichtung V über das Feld jeweils nach innen drücken bzw. biegen, so dass sie in den Wirkbereich des Einzugselements 12 gelangen. Auch die in Vorwärtsbewegungsrichtung vorlaufende Kante des Abstreifblechs 20 ist derart gekrümmt, dass die Stängel der Pflanzen 32 in den Wirkbereich des Einzugselements 12 gedrückt werden. Der Wirkbereich des Einzugselements 12 ist derart groß, dass die Einzugs- und Pflückeinrichtung 10 - im Zusammenwirken mit der gekrümmten vorlaufenden Kante des Abstreifblechs 20 und den Stängelteilern 28, 30 - reihenunabhängig arbeitet. Die Arbeitsbreite der Einzugs- und Pflückeinrichtung entspricht somit dem seitlichen Abstand der Spitzen der Stängelteiler 28, 30.

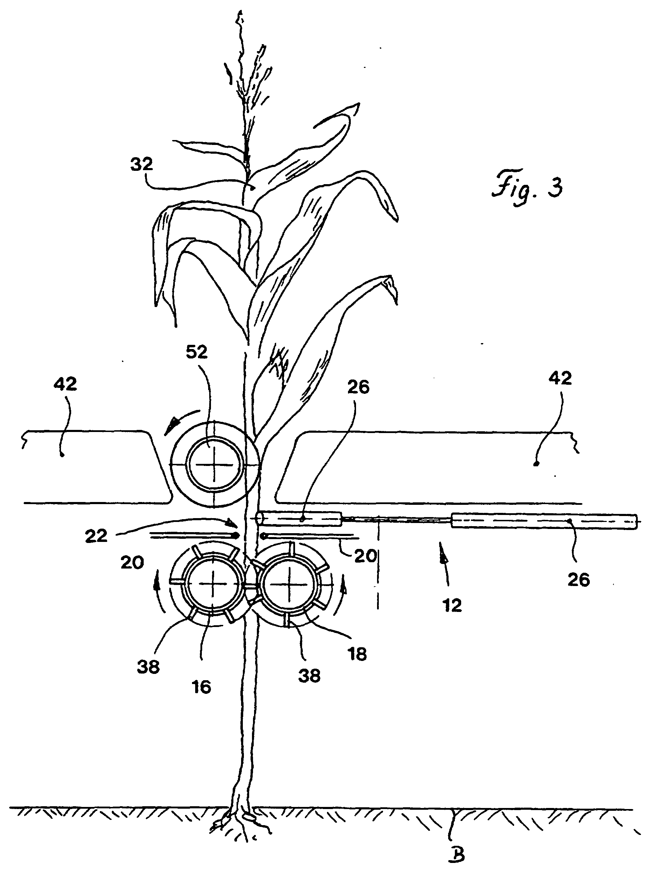

Anhand der Figur 1 ist die Wirkungsweise des Einzugselements 12 gut erkennbar. Ein Stängel einer auf dem Feld stehenden Pflanze 32 gerät - nachdem er (abhängig von seiner seitlichen Position) gegebenenfalls durch die Stängelteiler 28, 30 und/oder die vorlaufende Kante des Abstreifblechs 20 in Richtung auf den Pflückspalt 22 verbogen wurde - mit einem Finger 26 des Einzugselements 12 in Berührung. Der Stängel wird von der vorlaufenden Oberfläche des Fingers 26 mitgeführt und aufgrund der nachlaufenden und daher abweisenden Krümmung des Fingers 26 nach außen gedrückt. Auf diese Weise wird der Stängel der Pflanze 32 durch den Finger 26 in den Pflückspalt 22 transportiert, der sich zumindest näherungsweise parallel zur Vorwärtsbewegungsrichtung V erstreckt und zwischen der ersten Pflückwalze 16 und dem Einzugselement 12 in das Abstreifblech 20 eingebracht ist. Dabei wird die noch nicht vom Boden des Feldes getrennte Pflanze 32 (s. Figur 3) gegebenenfalls verbogen.

Die erste Pflückwalze 16 ist seitlich neben dem Einzugselement 12 angeordnet und leicht nach vorn und unten geneigt. Sie ist, betrachtet man die seitliche Richtung, parallel zur Vorwärtsbewegungsrichtung V orientiert. In vertikaler Richtung ist die erste Pflückwalze 16 unterhalb des Abstreifblechs 20 angeordnet. Im vorderen, bezüglich der Bewegungsrichtung der Pflanzen 32 stromaufwärts liegenden Bereich der ersten Pflückwalze 16 befindet sich ein Schneckenförderer 34, der in Zusammenwirken mit dem Einzugselement 12 den Stängel der Pflanze 32 in den Pflückspalt 22 einzieht. Das eingangsseitige Ende 23 des Pflückspalts 22 liegt bezüglich der Vorwärtsbewegungsrichtung V vor der Drehachse des Einzugselements 12 an der Stelle, an der der sich in Bewegungsrichtung der Pflanzen 32 zunächst verengende Abstand zwischen den beiden Teilen des Abdeckbleches 20 seinen über die Länge des Pflückspalts 22 konstanten Wert angenommen hat. Der Endbereich des Pflückspalts 22 ist jedoch in Richtung auf die Drehachse des Einzugselements 12 zu gekrümmt.

Beim Eintritt der Pflanzen 32 in den Pflückspalt 22 ergibt sich ein relativ stumpfer Winkel zwischen den Fingern 26 des Einzugselements 12 und dem ihnen gegenüberliegenden (in Figur 1 unten eingezeichneten) Rand des Abstreifblechs 20. Der Stängel der Pflanzen 32 kann aufgrund dieses stumpfen Winkels zwischen Abstreifblech 20 und Finger 26 abgequetscht werden, insbesondere wenn es sich um stark abgereifte und somit weiche Stängel von Maispflanzen handelt. Die Pflanze 32 wird in diesem Fall nicht weitertransportiert, so dass die Einzugs- und Pflückeinrichtung 10 verstopft.

Zur Lösung dieses Problems ist oberhalb des eingangsseitigen Endes 23 des Pflückspalts 22 und oberhalb des Einzugselements 12 ein Förderelement 52 in Form einer Förderschnecke angeordnet. Die Längs- und Förderrichtung des Förderelements 52 erstreckt sich parallel zur ersten Pflückwalze 16. Das Förderelement 52 weist etwa 1/3 der Länge der ersten Pflückwalze 16 auf und wird mittels eines Getriebes 54 in Drehung versetzt, welches eine Antriebsverbindung mit der vorderen Stirnseite der ersten Pflückwalze 16 herstellt. Die erste Pflückwalze 16 leitet somit das Antriebsmoment von der Welle 46 zum Förderelement 52 durch. Das Gehäuse des Getriebes 54 ist am Abstreifblech 20 befestigt. Das Förderelement 52 ist nur an seiner in Vorwärtsfahrtrichtung V vorderen Stirnseite am Getriebe 54 gelagert, an seiner hinteren Stirnseite ist es jedoch nicht gelagert oder abgestützt.

Der von einem Finger 26 des Einzugselements 12 erfasste Stängel einer Pflanze 32 wird durch den Finger 26 gegen das Förderelement 52 gedrückt. Die Fördergeschwindigkeit des Förderelements 52 ist auf die Fördergeschwindigkeit des Schneckenförderers 34 und des Einzugselements 12 abgestimmt, so dass die Pflanze 32 von den Förderschnecken und dem Einzugselement 12 synchron nach hinten in den Pflückspalt 22 verbracht wird. Das Förderelement 52 stellt der Pflanze 32 oberhalb des Fingers 26 des Einzugselements 12 eine Abstützung und Förderung bereit. Durch das Zusammenspiel der beiden Förderschnecken und des Fingers 28 wird die Pflanze 32 sicher gehalten und geradlinig in den Pflückspalt 22 und zwischen die Pflückwalzen 16, 18 geführt. Die Pflanze wird an drei Punkten abgestützt, so dass ein Abknicken oder -quetschen nicht mehr zu befürchten ist. Zusätzlich wird durch das Förderelement 52 das Einzugsverhalten der Einzugs- und Pflückeinrichtung 10 erheblich aggressiver.

Im Ergebnis gelangt der Stängel der Pflanze 32 durch die Förderwirkung des Schneckenförderers 34, des Förderelements 52 und des Einzugselements 12 in den Wirkungsbereich der zweiten Pflückwalze 18, deren vordere Spitze (bezüglich der Vorwärtsbewegungsrichtung V betrachtet) ebenfalls vor der Drehachse des Einzugselements 12 liegt. Die zweite Pflückwalze 18 ist parallel zur ersten Pflückwalze 16 orientiert und zwischen letzterer und der Drehachse des Einzugselementes 12 angeordnet, wobei der zwischen der ersten Pflückwalze 16 und der zweiten Pflückwalze 18 definierte Spalt vertikal unterhalb des Pflückspalts 22 angeordnet ist. Der hintere Bereich 36 der ersten Pflückwalze 16, dessen Länge der Länge der zweiten Pflückwalze 18 entspricht, und die zweite Pflückwalze 18 sind in an sich bekannter Weise mit axial verlaufenden, nach außen überstehenden Mitnehmern 38 versehen, wie sie am besten in Figur 3 erkennbar sind. Bezüglich der Figur 3 rotiert die erste Pflückwalze 16 im Uhrzeigersinn, die zweite Pflückwalze 18 im Gegenuhrzeigersinn. Die erste Pflückwalze 16 und der hintere Bereich 36 der zweiten Pflückwalze 18 ziehen den Stängel der Pflanze 32 nach unten ein. Dabei dient das Abstreifblech 20 beidseits des Pflückspalts 22 zum Abstreifen von Nutzeilen der Pflanze 32.

Das Förderelement 52 endet genau oberhalb des vorderen Endes der zweiten Pflückwalze 18 und des Anfangs des hinteren Bereichs 36 der ersten Pflückwalze 16. Sobald die Pflanze 32 von den Pflückwalzen 16, 18 nach unten eingezogen wird, endet somit die Förderung durch das Förderelement 52 und den Schneckenförderer 34 der ersten Pflückwalze 16.

Während des Pflückvorgangs bewirken die Finger 26 des Einzugselements 12, dass die Pflanze 32 über die Länge des Pflückspalts 22 transportiert wird. Die Drehzahlen der Pflückwalzen 18, 20 und der Einzugselemente 14, 16 sind vorzugsweise derart bemessen, dass die gesamte Pflanze 22 in den Pflückkanal 26 nach unten eingezogen wurde, wenn das Ende des Pflückkanals 26 erreicht ist.

Die durch die Pflückeinrichtung abgetrennten Nutzteile der Pflanzen 32, wie Maiskolben, Fruchtstände von Sonnenblumen usw. werden durch das Einzugselement 12 in einen an der Rückseite der Einzugs- und Pflückeinrichtung 10 angeordneten Trog 40 gefördert, wobei eine Abdeckung 42 beidseits des Pflückspalts 22 einen zum Trog 40 führenden Kanal definiert, durch den die Nutzteile der Pflanzen 32 gefördert werden. Die Abdeckung 42 überdeckt das Einzugselement 12 und die Fördereinrichtung 52 teilweise und erhöht durch ihre Abschirmwirkung die Funktions- und Arbeitssicherheit der Einzugs- und Pflückeinrichtung 10. Der Trog 40 kann mit dem Abstreifblech 20 einteilig oder ein davon getrenntes, separates Element sein. Eine oberhalb des Trogs 40 angeordnete, quer zur Vorwärtsfahrtrichtung orientierte Förderschnecke 44 transportiert die Nutzteile zu einem Erntefahrzeug (z. B. Mähdrescher oder Feldhäcksler) oder auf einen Anhänger. Unterhalb des Trogs 40 ist eine Welle 46, die zum Antrieb der beiden Pflückwalzen 16, 18, des Häckselmessers 14, des Förderelements 52 und des Einzugselements 12 der Einzugs- und Pflückeinrichtungen 10 dient. Die Welle 46 steht mit dem Motor eines die Erntegutbergungsvorrichtung tragenden Fahrzeugs in Antriebsverbindung. Ein Rahmen 48 trägt die Einzugs- und Pflückeinrichtungen 10 der Erntegutbergungsvorrichtung, die alle durch die Welle 46 angetrieben werden.

Die Reste der Pflanze 32, die von den Pflückwalzen 16, 18 nach unten abtransportiert werden, gelangen in den Wirkungsbereich des rotierenden, vierarmigen Häckselmessers 14 und werden durch dieses in einzelne Stücke zerteilt. Auf dem Feld werden somit gehäckselte Pflanzenreste abgelegt. Während des Zerteilens halten die Pflückwalzen 16, 18 die Pflanze 18 fest. Das Häckselmesser 14 rotiert um eine vertikal verlaufende Drehachse 50, die bezüglich der Vorwärtsbewegungsrichtung V zwischen der Drehachse des Einzugselements 12 und der Förderschnecke 44 angeordnet ist, wie Figur 2 erkennbar ist, und wird durch die Welle 46 über ein Winkelgetriebe 56 angetrieben. In vertikaler Richtung ist das Häckselmesser 14 unterhalb der Pflückwalzen 16, 18 positioniert. Die Drehrichtung des Häckselmessers 14 ist, betrachtet man Figur 1, im Uhrzeigersinn, so dass das gehäckselte Gut seitlich nach hinten geschleudert wird.

## Patentansprüche

1. Einzugs- und Pflückeinrichtung (10), mit einem in Drehung versetzbaren Einzugselement (12), das betreibbar ist, Teile, insbesondere Stängel, von auf einem Feld stehenden Pflanzen (32) zu erfassen und die Pflanzen (32) in den Pflückspalt (22) einer Pflückeinrichtung einzuführen, die betreibbar ist, Teile von ihnen abzutrennen, wobei oberhalb des Einzugselements (12) ein Förderelement (52) vorgesehen ist, das sich stromaufwärts und oberhalb des eingangsseitigen Endes (23) des Pflückspalts (22) befindet, sich parallel zum Pflückspalt (22) erstreckt und eingerichtet ist, die Pflanzen (32) im Zusammenwirken mit dem Einzugselement (12) in den Pflückspalt (22) zu fördern, **dadurch gekennzeichnet, dass** sich das Einzugselement (12) oberhalb des Pflückspalts (22) befindet.

2. Einzugs- und Pflückeinrichtung (10) nach Anspruch 1, **dadurch gekennzeichnet, dass** das Förderelement (52) eine Förderschnecke ist, die sich über einen Bereich stromauf des Pflückspalts (22) und wenigstens über einen Teil der Länge des Pflückspalts (22) erstreckt.

3. Einzugs- und Pflückeinrichtung (10) nach Anspruch 1 oder 2, **dadurch gekennzeichnet, dass** das Förderelement (52) auf einer Seite des Pflückspalts (22) angeordnet ist, und das Einzugselement (12) auf der anderen Seite des Pflückspalts (22).

4. Einzugs- und Pflückeinrichtung (10) nach einem der Ansprüche 1 bis 3, **dadurch gekennzeichnet, dass** das Förderelement (52) über ein an seiner Vorderseite angeordnetes Getriebe (54) angetrieben wird, das von einer angetriebenen Pflückwalze (16) der Pflückeinrichtung angetrieben wird.

5. Einzugs- und Pflückeinrichtung (10) nach Anspruch 4, **dadurch gekennzeichnet, dass** das Förderelement (52) nur am Getriebe (54) abgestützt ist.

6. Einzugs- und Pflückeinrichtung (10) nach einem der vorhergehenden Ansprüche, **dadurch gekennzeichnet, dass** die Fördereinrichtung (52) unmittelbar oberhalb des Einzugselements (12) angeordnet ist.

7. Einzugs- und Pflückeinrichtung (10) nach einem der vorhergehenden Ansprüche, **dadurch gekennzeichnet, dass** die Pflückeinrichtung eine Pflückwalze (16) umfasst, die einen bezüglich der Bewegungsrichtung der Pflanzen (32) stromaufwärts liegenden Bereich mit einem Schneckenförderer (34) aufweist, der synchron mit der Fördereinrichtung (52) angetrieben wird, wobei die Fördereinrichtung (52) sich oberhalb des vorderen Bereichs (34) befindet.

8. Einzugs- und Pflückeinrichtung (10) nach Anspruch 7, **dadurch gekennzeichnet, dass** die bezüglich der Bewegungsrichtung der Pflanzen (32) stromabwärts liegenden Enden des Schneckenförderers (34) der Pflückwalze (16) und des Förderelements (52) übereinander liegen.

9. Einzugs- und Pflückeinrichtung (10) nach einem der vorhergehenden Ansprüche, **dadurch gekennzeichnet, dass** das Einzugselement (12) die Pflanzen (32) über die Länge des Pflückspalts (22) transportiert.

10. Einzugs- und Pflückeinrichtung (10) nach Anspruch 9, **dadurch gekennzeichnet, dass** das Einzugselement (12) sich nach außen erstreckende Finger (26) aufweist und um eine zumindest näherungsweise vertikale Achse, die seitlich neben dem Pflückspalt liegt, rotativ angetrieben wird.

11. Einzugs- und Pflückeinrichtung (10) nach Anspruch 10, **dadurch gekennzeichnet, dass** das Einzugselement (12) gekrümmte Finger (26) aufweist, deren vorlaufende Oberflächen ein abweisendes Förderverhalten aufweisen.

## Claims

1. An infeed and plucking device (10) with a rotatable infeed element (12) which can be operated to engage parts, especially stalks, of plants standing in a field, and to introduce the plants (32) into the plucking gap (22) of a plucking device, which is operable to separate off parts thereof, wherein a conveyor element (52) is provided above the infeed element (12) and is located upstream of and above the input end (23) of the plucking gap (22), extends parallel to the plucking gap (22) and is arranged to feed the plants (32) in conjunction with the infeed element (12) into the plucking gap (22), **characterized in that** the infeed element (12) is located above the plucking gap (22).

2. An infeed and plucking device (10) according to claim 1, **characterized in that** the conveyor element (52) is a conveyor auger which extends over a region upstream of the plucking gap (22) and at least over a part of the length of the plucking gap (22).

3. An infeed and plucking device (10) according to claim 1 or 2, **characterized in that** the conveyor element (52) is arranged on one side of the plucking gap (22) and the infeed element (12) is arranged on the other side of the plucking gap (22).

4. An infeed and plucking device (10) according to any of claims 1 to 3, **characterized in that** the conveyor element (52) is driven through a gearbox (54) arranged on its front end and driven by a driven plucking roller (16) of the plucking device.

5. An infeed and plucking device (10) according to claim 4, **characterized in that** the conveyor element (52) is supported solely on the gearbox (54).

6. An infeed and plucking device (10) according to any of the preceding claims, **characterized in that** the conveyor device (52) is arranged directly above the infeed element (12).

7. An infeed and plucking device (10) according to any of the preceding claims, **characterized in that** the plucking device comprises a plucking roller (16) which comprises a region with an auger conveyor (34) lying upstream relative to the direction of movement of the plants (32), which conveyor is driven synchronously with the conveyor device (52), wherein the conveyor device (52) is located above the front region (34).

8. An infeed and plucking device (10) according to claim 7, **characterized in that** the ends of the auger conveyor (34) of the plucking roller (16) and of the conveyor element (52) downstream relative to the direction of movement of the plants (32) lie above one another.

9. An infeed and plucking device (10) according to any of the preceding claims, **characterized in that** the infeed element (12) transports the plants (32) over the length of the plucking gap (22).

10. An infeed and plucking device (10) according to claim 9, **characterized in that** the infeed element (12) comprises outwardly extending fingers (26) and is driven in rotation about an at least approximately vertical axis which lies by the side of the plucking gap.

11. An infeed and plucking device (10) according to claim 10, **characterized in that** the infeed element (12) comprises curved fingers (26) whose leading surfaces have a deflecting away conveyor behaviour.

## Revendications

1. Dispositif de ramassage et cueillage (10), comportant un élément de cueillage (12) apte à être entraîné en rotation, qui peut être actionné pour saisir des parties, plus particulièrement des tiges, de plantes (32) poussant dans un champ et d'introduire les plantes (32) dans la fente de ramassage (22) d'un dispositif de ramassage, propre à être actionné pour séparer des parties de ces plantes, un dispositif de transport (52) étant prévu au-dessus de l'élément de cueillage (12), lequel est disposé en amont et au-dessus de l'extrémité d'entrée (23) de la fente de ramassage (22), lequel s'étend parallèlement à la fente de ramassage (22) et lequel est équipé pour amener les plantes (32) en coopération avec l'élément de cueillage (12) dans la fente de ramassage (22), **caractérisé en ce que** l'élément de cueillage (12) est disposé au-dessus de la fente de ramassage (22).

2. Dispositif de ramassage et cueillage (10) selon la revendication 1, **caractérisé en ce que** le dispositif de transport (52) est une vis sans fin, qui s'étend sur une zone en amont de la fente de ramassage (22) et au moins sur une partie de la longueur de la fente de ramassage (22).

3. Dispositif de ramassage et cueillage (10) selon la revendication 1 ou 2, **caractérisé en ce que** le dispositif de transport (52) est agencé sur un côté de la fente de ramassage (22) et l'élément de cueillage (12) est agencé sur l'autre côté de la fente de ramassage (22).

4. Dispositif de ramassage et cueillage (10) selon l'une quelconque des revendications 1 à 3, **caractérisé en ce que** le dispositif de transport (52) est actionné par l'intermédiaire d'une transmission (54), qui est agencée au niveau de son côté avant et qui est actionnée par un rouleau de ramassage (16) du dispositif de ramassage.

5. Dispositif de ramassage et cueillage (10) selon la revendication 4, **caractérisé en ce que** le dispositif de transport (52) est seulement en appui contre la transmission (54).

6. Dispositif de ramassage et cueillage (10) selon l'une quelconque des revendications précédentes, **caractérisé en ce que** le dispositif de transport (52) est agencé directement au-dessus de l'élément de cueillage (12).

7. Dispositif de ramassage et cueillage (10) selon l'une quelconque des revendications précédentes, **caractérisé en ce que** le dispositif de ramassage comporte un rouleau de ramassage (16), qui comporte une zone située à l'avant, par rapport à la direction de transport des plantes (32), avec un convoyeur à vis sans fin (34) qui est actionné de manière synchrone avec le dispositif de transport (52), le dispositif de transport (52) étant situé au-dessus de la zone avant (34).

8. Dispositif de ramassage et cueillage (10) selon la revendication 7, **caractérisé en ce que** les extrémités situées à l'arrière, par rapport à la direction de transport des plantes (32), du convoyeur à vis sans fin (34) du rouleau de ramassage (16) et du dispositif de transport (52) sont superposées.

9. Dispositif de ramassage et cueillage (10) selon l'une quelconque des revendications précédentes, **caractérisé en ce que** l'élément de cueillage (12) transporte les plantes (32) sur toute la longueur de la fente de ramassage (22).

10. Dispositif de ramassage et cueillage (10) selon la revendication 9, **caractérisé en ce que** l'élément de cueillage (12) comporte des doigts (26) orientés vers l'extérieur et est entraîné en rotation autour d'un axe au moins approximativement vertical, juxtaposé latéralement à la fente de ramassage.

11. Dispositif de ramassage et cueillage (10) selon la revendication 10, **caractérisé en ce que** l'élément de cueillage (12) comporte des doigts (26) coudés, dont les faces avant présentent un comportement inapte au transport.
